# EUROPEAN PATENT SPECIFICATION

(11) **EP 2 007 975 B1**
(45) Date of publication and mention of the grant of the patent: **28.04.2010**
(21) Application number: 07712883.3
(22) Date of filing: 09.03.2007
(51) Int. Cl.: F01N 3/20

(54) **A MIXING DEVICE FOR AN EXHAUST SYSTEM**
MISCHVORRICHTUNG FÜR EIN ABGASSYSTEM
DISPOSITIF DE MELANGEAGE POUR UN SYSTEME D'ECHAPPEMENT

(30) Priority: 28.03.2006 GB 0606116
(43) Date of publication of application: 31.12.2008
(73) Proprietor: Et UK Industries Limited, Blackpool, Lancashire FY4 3YN (GB)
(72) Inventor: TELFORD, Clive, Lancaster LA1 5XA (GB)
(74) Representative: Prinz & Partner
(86) International application number: PCT/GB2007/000844
(87) International publication number: WO 2007/110575

(56) References cited:
- EP-A1- 0 558 452
- WO-A-97/01387
- US-A- 3 741 730
- US-A1- 2005 210 865

## Description

The invention relates to a mixing device for mixing a gas and a liquid in an exhaust system, the mixing device having an injector for injecting the liquid and having a shell and an inlet and an outlet and an exhaust gas flow path between the inlet and outlet, the mixing device defining an axis and the flow path having a first and a second part, the first part extending generally parallel to the axis to direct flow in a generally forward direction said first part extending up to a first axial position, the second part extending generally parallel to the axis to direct flow in a generally reverse direction. The invention further relates to an exhaust system including such mixing device.

To clean up emissions from vehicles such as trucks and cars it is known to use diesel particulate filters (DPF) and selective catalytic reduction (SCR).

With regard to DPFs, in order to burn off the accumulated carbon on the DPF, it is known to inject diesel fuel or other hydrocarbons in front of a diesel oxidising catalytic (DOC) to create heat by catalytic oxidation. This heat then passes from the DOC to the DPF raising the temperature of the DPF and hence burning off the accumulated carbon.

SCR is used to remove oxides of nitrogen (NOx). In this case urea, or a similar liquid is injected upstream of the SCR catalyst to act as a chemical reductant to remove NOx.

For either system to work reliably and effectively it is necessary that the injected liquids are highly dispersed and are evenly distributed onto the catalyst. However, on a typical installation there is little space available to allow good mixing to occur. It is known to provide devices to create turbulence to assist mixing, however, these devices cause a relatively high back pressure which adversely effects fuel economy and engine durability.

EP-A-0 558 452 discloses a mixing device as defined above, which consists of a pyrolysis channel with an injector at the upstream end, and a mixing channel. The mixing channel extends in parallel with the pyrolysis channel, but adjacent thereto so that the gas flows through the mixing channel in a direction which is opposite to the flow direction through the pyrolysis channel.

The present invention seeks to improve the known mixing devices.

In order to achieve this object, the invention provides a mixing device as defined above, which is characterized by the flow path having a third part, the third part extending generally parallel to the axis to direct flow in the generally forward direction, in which the third part is a volume that allows mixing and extends past the first axial position. This mixing device combines an efficient mixing with small dimension.

The invention will now be described, by way of example only, with reference to the accompanying drawings in which:
Figures 1 to 4 show cross sections of exhaust systems including mixing devices according to the present invention,
Figures 5 and 6 show end views of parts of figure 4,
Figure 7 shows an enlarged view of figure 4,
Figures 8 to 10 show further embodiments of exhaust systems including mixing devices according to the present invention.
Figures 11 to 12F show a further embodiment of an exhaust system including mixing devices according to the present invention.

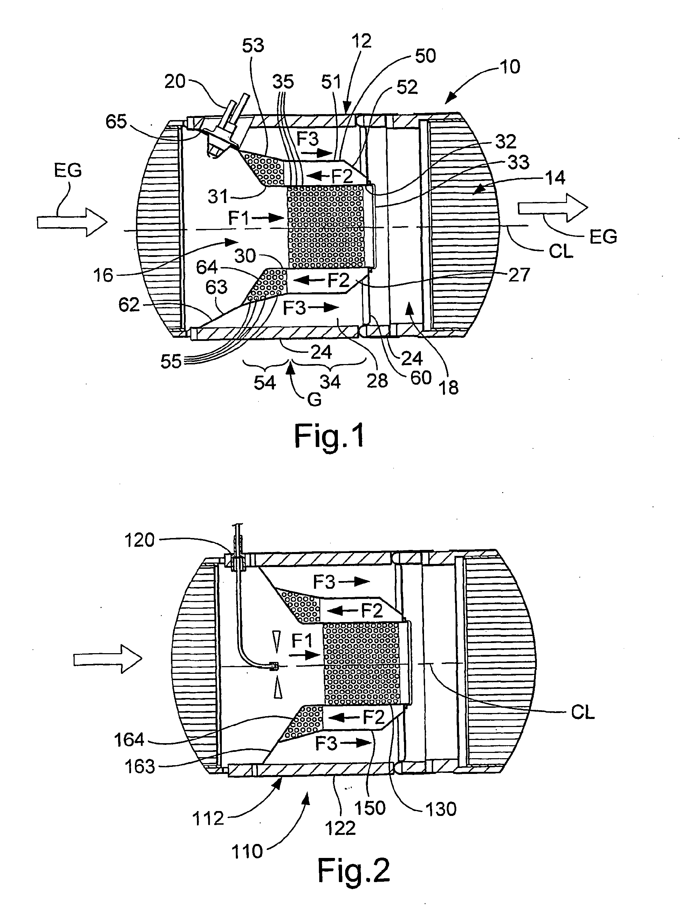

Figure 1 shows part of an exhaust system 10 including a mixing device 12 and a catalyst 14. The mixing device 12 includes an inlet 16 and an outlet 18. Between the inlet and the outlet there is defined a gas flow path F1, F2, F3. The mixing device also includes an injector 20. The exhaust system is connected to an exhaust manifold (not shown) of an internal combustion engine. When the engine is running, exhaust gases pass down the exhaust system generally from left to right as shown by the exhaust gas arrows EG. When required, a reagent is injected into the exhaust gas flow by injector 20. The injected reagent and exhaust gas then pass through the mixing device 12 and on to the catalyst 14.

Where the catalyst is a DOC, the reagent injected by injector 20 is diesel fuel or another type of hydrocarbon fuel. Where the catalyst is an SCR the reagent injected by injector 20 is urea or an equivalent reagent.

In summary, the mixing device is designed such that reverse flow of the exhaust gas and reagent occurs as they pass through the mixing device. Thus, it can be seen that the flow path F1 is generally left to right, the flow path F2 is generally right to left, and the flow path F3 is generally left to right. In this case, there are two general reversals of gas flow, though in further embodiments the mixing device could be designed to have a single reversal of gas flow or three reversals of gas flow or four reversals of gas flow or more than four reversals of gas flow.

The gas flow reversal creates a homogeneous distribution of liquid within the exhaust gas which then passes onto the catalyst with minimum loss of space and minimum back pressure.

In more detail, the mixing device 12 includes a shell 22 having an outer portion 24 made from sheet steel and an inner portion 26 made from a thermal insulation material.

A central tube 30 is positioned within the shell 22 and a sleeve 50 is positioned between the central tube and the shell. The left hand (when viewing figure 1) end 31 of tube 30 defines the inlet 16. The right hand (when viewing figure 1) end 32 of tube 30 is blanked off by blanking plate 33. Between ends 31 and 32 the tube has a perforated region 34. In this case the perforated region comprises over 200 holes 35.

The sleeve 50 includes a central cylindrical portion 51, a frustoconical end portion 52 and a frustoconical end portion 53.

The frustoconical end portion connects the cylindrical portion 51 with the right hand end 32 of central tube. There are no perforations in either the cylindrical portion 51 or the frustoconical end portion 52, and as such the frustoconical end portion 52 acts to blank off the right hand end of sleeve 50.

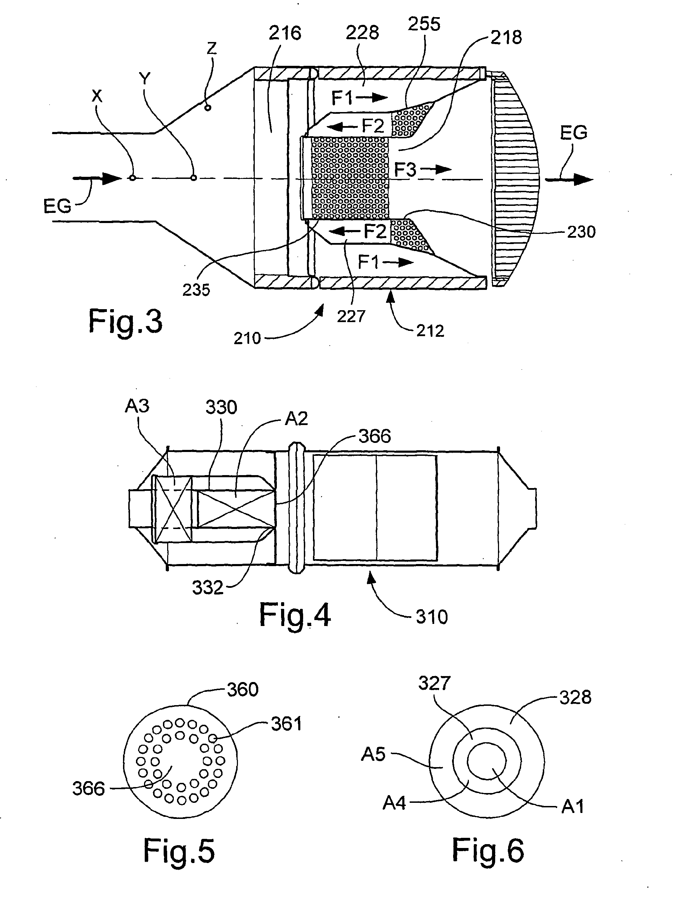

However, the frustoconical end portion 53 defines a perforated region 54 of the sleeve 50. The perforated region 54 includes holes 55 in this case over 200 holes. The right hand end of the central tube and the right hand end of the sleeve are both supported by a baffle 60. Baffle 60 includes holes to allow the passage of the exhaust gases, these holes are similar to those shown on baffle 360 on figure 5.

A support member 62 includes an outer frustoconical region 63 and an inner frustoconical region 64. There are no perforations in the outer frustoconical region and there are no perforations in the inner frustoconical region. The left hand end of the perforated region 54 of the sleeve 50 is connected to the right hand end of the outer frustoconical region, and is therefore supported by the outer frustoconical region. The left hand end 31 of the central tube is connected to and supported by the right hand end of the inner frustoconical region. The inner frustoconical region is, inturn, supported at its left hand end by the outer frustoconical region. The outer frustoconical region 63 includes a portion 65 which supports the injector 20.

Consideration of the perforated region 34 of the central tube and the perforated region 54 of the sleeve show that they do not axially overlap, i.e. there is a gap G between the axial position of the left most hole of the perforated region 34 and the right most hole of the perforated region 54.

It will be appreciated that the exhaust gas and reagent must initially enter the central tube 30 via the inlet 16. At this point, all the exhaust gas is travelling from left to right when viewing figure 1. When the exhaust gas has reached the perforated region 34, the exhaust gas flow direction will turn and the exhaust gas will flow radially outwardly through the holes 35 into an inner annular region 27 defined between the central tube 30 and sleeve 50. When in this inner annular region exhaust gases will be forced to move from right to left towards the perforated region 54. Upon reaching the perforated region 54 the exhaust gas will again turn and flow generally radially outwardly through the holes 55 into an outer annular region defined between cylindrical portion 51 and the shell 22. When in this outer annular region 28, the exhaust gases will be forced to move from left to right.

It will therefore be appreciated that the flow path includes the first general reversal of the direction of exhaust flow which general reversal will occur as the exhaust gas passes through holes 35. The flow path also includes a second general reversal of the direction of exhaust gas flow, which will occur typically as the exhaust gas passes through the holes 55.

It will also be appreciated that since the central tube 30, the cylindrical portion 51 and the shell 22 are all cylindrical, and are all concentric, the exhaust gas flow path is substantially symmetrical about the centre line CL of the mixing device 12, and this is in spite of the fact that the injector 20 is positioned asymmetrically relative to the centre line.

It will also be appreciated that there is a space between the catalyst 14 and the blanking plate 33 which defines the outlet 18. Note that final mixing occurs in flow path F3 and in outlet 18 prior to the gas entering the catalyst 14.

Note that flow path F2 generally surrounds flow path F1 and that flow path F3 generally surrounds flow path F2.

Figure 2 shows an exhaust system 110 in which components that fulfil substantially the same function as those of exhaust system 10 are labelled 100 greater.

In exhaust system 110, the injector 120 injects reagent at the centre line CL of the mixing device 112 whereas the injector 20 injects reagent from the edge of the mixing device. It will be appreciated that the flow path F1, F2, F3 shown in figure 2 is identical to the flow path F1, F2, F3 shown in figure 1.

Figure 3 shows an exhaust system 210 in which components that fulfils substantially the same function as those of exhaust system 10 are labelled 200 greater. In summary the mixing device 212 is a "mirror image" version of mixing device 12. Thus, the exhaust gas flow is generally from left to right as shown by arrows EG. However, the exhaust gas enters the mixing device at inlet 216 and leaves the mixing device at outlet 218. It will be appreciated that flow F1 is from left to right along outer annular region 228. The flow then reverses by flowing radially inwardly through holes 255 into inner annular region 227 at which point the gas flow is from right to left. The flow then reverses again by flowing radially inwardly through holes 235 and then flows from left to right along the centre of central tube 230 and out of the mixing device. The injector is positioned upstream of the mixing device and positions X, Y and Z show examples of where the injector might be positioned.

Note that because the mixing device 212 is a "mirror image" version of mixing device 12, the flow path F1 generally surrounds the flow path F2 and the flow path F2 generally surrounds the flow path F3.

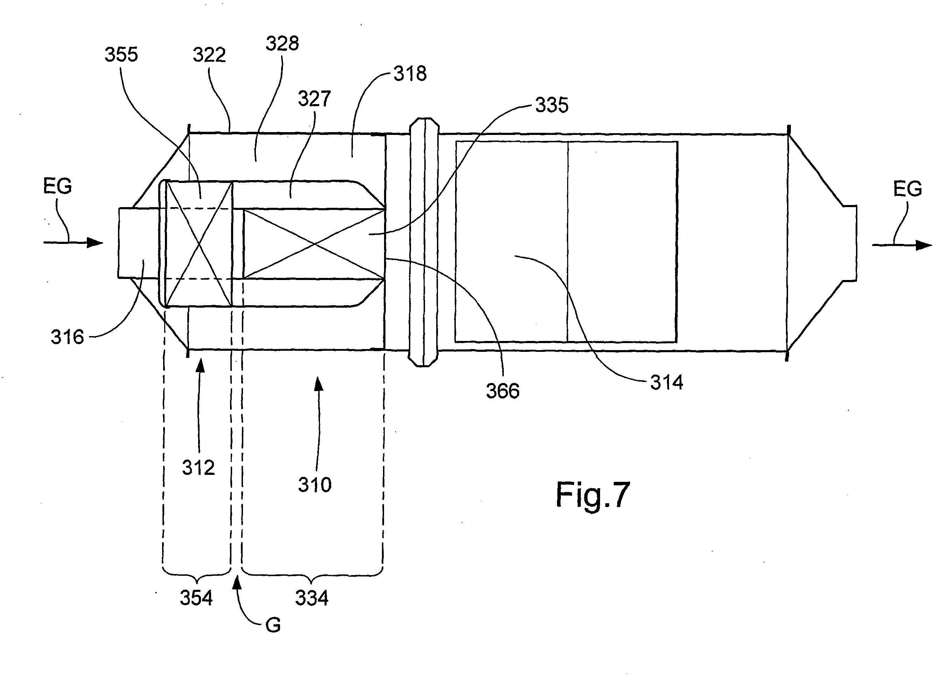

Figures 4 to 7 show an exhaust system 310 in which components that fulfil substantially the same function as those of exhaust system 10 are labelled 300 greater.
In this case the injector is not shown, but will be positioned upstream of inlet 316. Holes 355 and 355 are only shown schematically (as crosses).

Figure 5 shows an end view of the baffle 360 which includes several holes 361 which allow the exhaust gases to pass through the baffle and onto the catalyst 314. A central region 366 of baffle 360 acts to blank off the end 332 of central tube 330. The cross section area of the central tube 330 is A1 (see figure 6). The cross section area of the inner annular region 327 is A4 and the cross section area of the outer annular region 328 is A5.

The open area (i.e. the gas flow area) of the holes 330 is A2 and the open area (i.e. gas flow area) of the holes 355 is A3.

Preferably A2 approximately equals A3.

Preferably A2 is greater than or equal to 1.5 times A1.
Preferably A2 is greater than or equal to 1.5 times A4.
Preferably A2 is greater than or equal to 1.5 times A5.

Preferably A3 is greater than or equal to 1.5 times A1.
Preferably A3 is greater than or equal to 1.5 times A4.
Preferably A3 is greater than or equal to 1.5 times A5.

Preferably A4 is approximately equal to A1 or is greater than A1.

Preferably A5 is approximately equal to A1 or greater than A1.

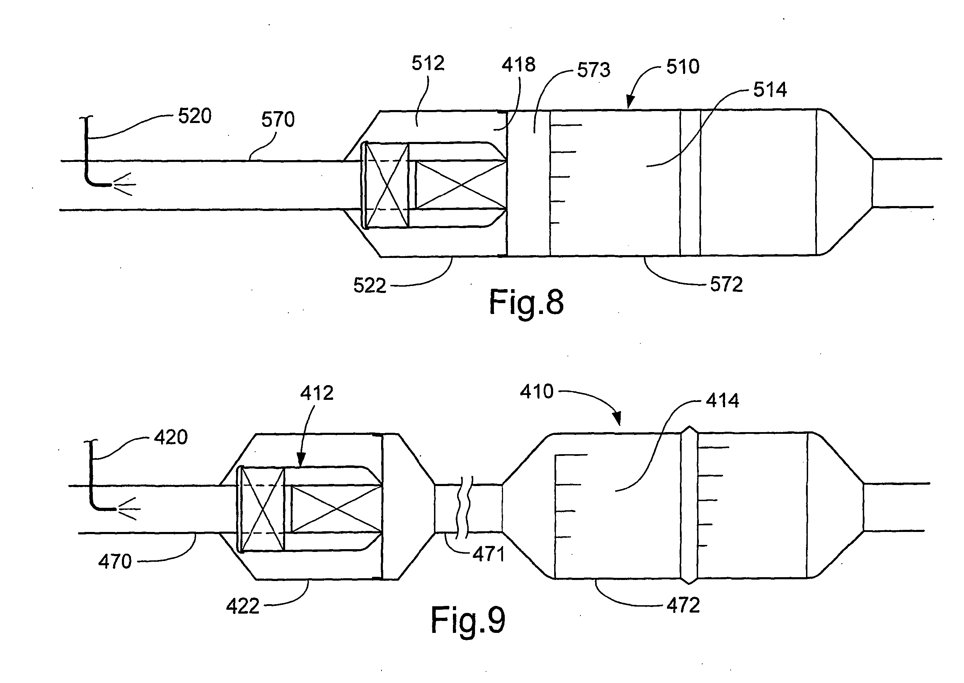

Figure 9 shows an exhaust system 410 in which components that fulfil substantially the same function as those shown in exhaust system 10 are labelled 400 greater. In this case the injector 420 is positioned in a pipe 470, the diameter of the pipe 470 is smaller than the diameter of the shell 422. A further pipe 471 connects the mixing device 412 with the catalyst 414. The diameter of the pipe 471 is smaller than the diameter of shell 422. The diameter of pipe 471 is also smaller than the casing 472 of the catalyst. Pipe 471 can vary in length, and can include one or more bends, depending upon the particular installation.

Figure 8 shows an exhaust system 510 in which components that fulfil substantially the same function as those shown in 410 are labelled 100 greater. In this case exhaust system 510 is a modified version of exhaust system 410. It can be seen that the mixing device 512 and the catalyst 514 have been integrated into a single unit. Thus, the exhaust system 510 does not include a pipe the equivalent of pipe 471 of exhaust system 410. The integrated exhaust system 510 is more compact than the exhaust system 410, and also includes fewer components (in as much as it does not include pipe 471).

Thus, the exhaust system 510 is integrated in as much as the outlet 418 from the mixing device passes directly to the inlet 573 to the catalyst 514. In other words, the diameter of the shell 522 of the mixing device is substantially the same as the diameter of the casing 572 of the catalyst 514, i.e. when the exhaust gases pass from the mixing device to the catalyst, there is no significant reduction in cross section area of flow path.

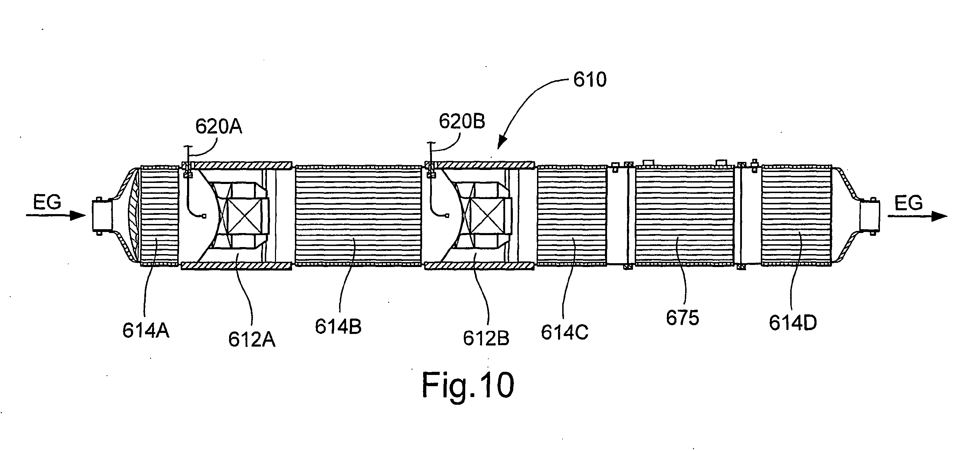

Figure 10 shows an exhaust system 610 incorporating two mixing devices according to the present invention. The exhaust system 610 also incorporates 4 catalysts and a DPF.

Thus, catalyst 614A is a DOC, catalyst 614B is an SCR, catalyst 614C is DOC and catalyst 614D is DOC. A DPF 675 is provided between catalyst 614C and 614D. Injector 620A is a urea injector and injector 620B is a diesel fuel injector. As the exhaust gases pass through the exhaust system 610, they are treated as follows:-
(a) the DOC catalyst 614A oxidises NO to NO₂.
(b) Urea is injected at injector 620A and mixed with the exhaust gas in mixing device 612A.
(c) The SCR catalyst 614B then removes NOx.
(d) The diesel injector 620B injects diesel into the gas stream and the mixing device 612B mixes the exhaust gas and the diesel.
(e) The exhaust gas/diesel mixture pass into the DOC 614C and the diesel fuel is oxidised thereby generating heat.
(f) the heat is passed into the DPF 675, thereby burning off accumulative carbon.
(g) The exhaust gas then passes into the DOC catalyst 614D to oxidise any remaining hydrocarbons.

It will be appreciated by those skilled in the art the injector 620A and 620B only inject reagent as and when required. Various sensors on the engine and within the exhaust system will determine when injection of a particular reagent is required and this injection is controlled by a control system.

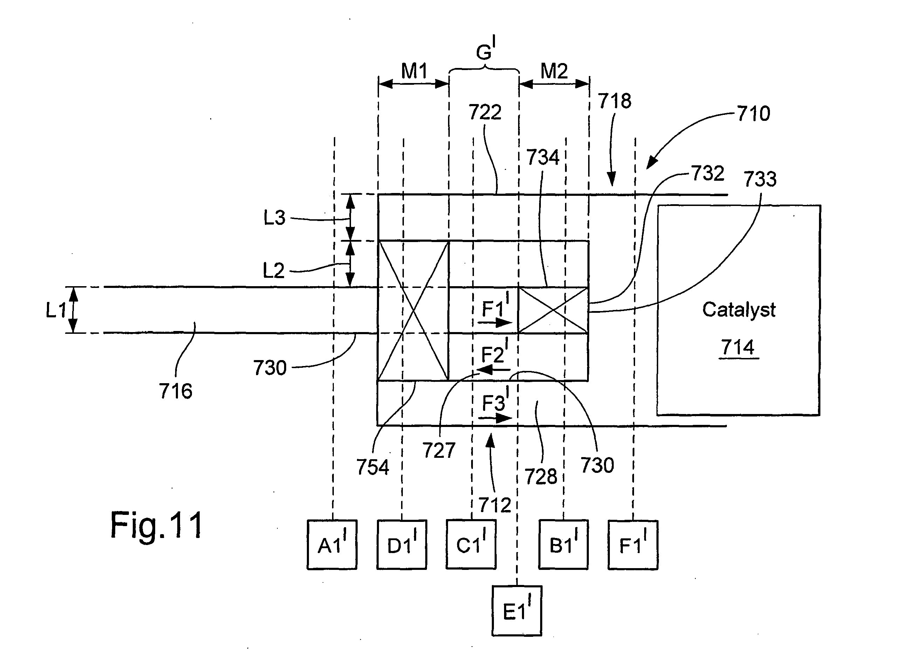

Figures 11 to 12F show an exhaust system 710 in which components that fulfil substantially the same function as those of exhaust system 10 are labelled 700 greater.

The mixing device 712 includes a shell 722. A central tube 730 is positioned partly within the shell and a sleeve 750 is positioned between the central tube and the shell. The tube defines an inlet 16. The right hand (when viewing figure 11) end 732 of tube 730 is blanked off by blanking, plate 733. Tube 730 has a perforated region 734 (shown schematically as a cross).

Sleeve 750 is connected to an extension of blanking plate 733 at its right hand end and includes a perforated region 754 at its left hand end (shown schematically as a cross).

Consideration of the perforated region 734 of the central tube and the perforated region 754 of the sleeve show that they do not axially overlap, i.e. there is a gap G' between the axial position of the left most hole of the perforated region 734 and the right most hole of the perforated region 754.

An injector (not shown) is included in central tube 730 to inject a reagent.

In use, exhaust gas and reagent are mixed in the mixing chamber and the flow is similar to that of exhaust system 10, i.e. the exhaust gas and reagent initially travel from left to right until the perforated region 734 is reached, whereupon the exhaust gas flow production will turn and the exhaust gas will flow radially outward through the holes in the perforated region 734 and into the annular region 727 defined between the central tube 730 and the sleeve 750. When in this inner annular region exhaust gases will be forced to move from right to left towards the perforated region 754. Upon reaching the perforated regions 754 the exhaust gas will again turn and flow generally radially outwardly through the holes in the perforated region 754 into an outer annular region defined between the cylindrical portion 751 and the shell 722. When in this outer annular region 728, the exhaust gases will be forced to move from left to right, and will ultimately pass the blanking plate 733.

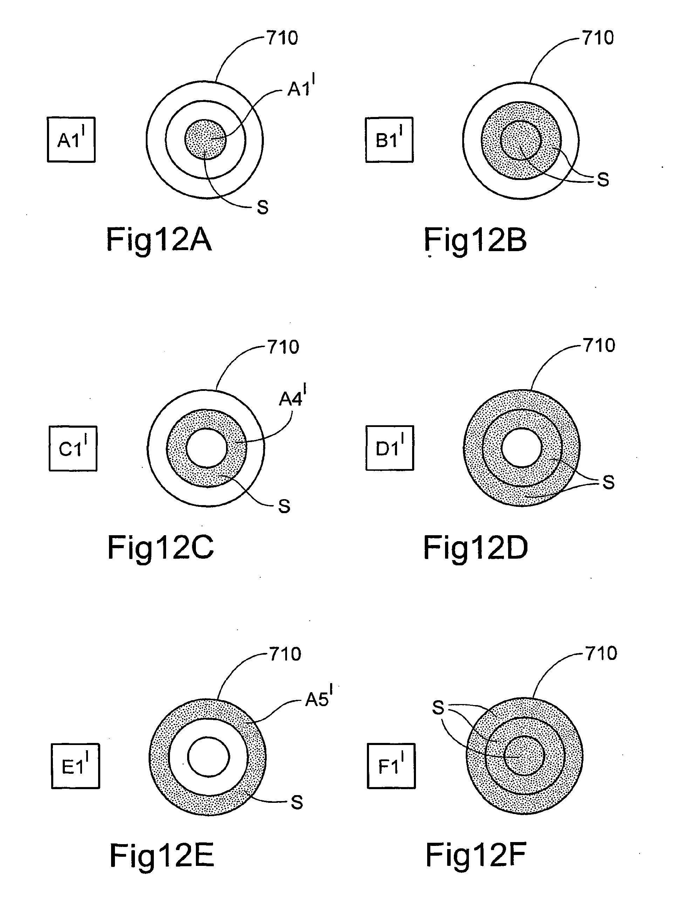

Figure 11 shows various axial positions A1', B1', C1', D1', E1' and F1' of the mixing chambers at the appropriate positions. For the purposes of explanation, we can consider a portion (or slug) of exhaust gas S travelling through the mixing chamber. At position A1', the slug is contained within the central tube 730 which has cross section area A1'. As the slug of gas moves to the B1' position, it expands, since it is no longer constrained by the central tube, and is only constrained by the sleeve 750. As shown in figure 12B, the slug occupies a cross section area of the mixing chamber equivalent to A1' plus A4'.

Once the slug of gas has reached position C1', whilst it is still constrained within sleeve 750, it is constrained on its inner diameter by tube 730. The gas is therefore flowing through an area A4' which is necessarily smaller than the volume at position B1'.

Once the slug of gas reaches the position D1', it is no longer radially constrained by sleeve 750 and can therefore expand radially outwardly to occupy the volume as shown in figure 12D, i.e. the volume cross section area equivalent to A4' plus A5'. Continued flow of the exhaust gas to position E1' again causes a narrowing of the cross section of flow area to A5'. Finally, as the slug of exhaust gas passes blanking plate 733, it can expand into the outlet (position F2') which has a cross section flow area equivalent to A1' plus A4' plus A5'.

In summary, the slug S, starting at position A1', will expand when it reaches position E1', and then will contract when it reaches position C1', and then will expand when it reaches position D1', and then will contract when it reaches position E1' and then will expand when it reaches position F1'.

The mixer therefore causes the gas to expand then contract then expand then contract then expand, and this process of repeated expansion and contraction attenuates the exhaust gas noise.

Consideration of figure 11 shows that the diameter of tube 730 is L1. The radial distance between tube 730 and sleeve 750 is L2. The radial distance between sleeve 750 and shell 722 is L3.

The length over which tube 730 is perforated is M1. The length over which sleeve 750 is perforated is M2. It will be noted that M1 is larger than L1 and is also larger than L2.

Furthermore, the open area of the perforated region 734 is larger than A1' and is also larger than A4'. The open area of perforated region 754 is larger than area A4' and is also larger than area A5'.

In this manner, the mixing chamber can be arranged to expand, then contract, then expand, then contract, then expand exhaust gas as it passes through the mixing chamber. A similar process of expansion and contraction and expansion and contraction and expansion occurs as exhaust gas pass through the other embodiments shown in the accompanying figures.

Turning to figure 1, there are over 200 holes 35, and there are also over 200 holes 55. Depending upon the particular circumstances, there may be more or less holes 35 and there may be more or less holes 55. Typically there will be more than 100 holes 35 to provide for perforated region 34, and typically there will be over 100 holes 55 to provide for perforated region 54. However, in further embodiments the perforated region 34 of central tube 30 could be completely removed, thereby creating a simple gap for the gases to pass through. Similarly, the perforated region 54 of the sleeve 50 could be completely removed, thereby creating a simple gap for the exhaust gases to pass through. Clearly, such modifications could be applied to any of the embodiments shown i.e. any of the set of perforations could be removed to create a simple gap for the gases to pass through.

Whilst the embodiments shown provide a substantially symmetrical flow path, in further embodiments this need not be the case.

As shown in figure 1, the perforated region 34 does not axially overlap with the perforated region 54. However, in further embodiments these perforated regions could axially overlap whilst nevertheless ensuring that there is still a general reversal of the exhaust gas flow within the mixing device.

## Claims

1. A mixing device (12; 112; 212; 312; 412; 512; 612; 712) for mixing a gas and a liquid in an exhaust system (10; 110; 210; 310; 410; 510; 610; 710), the mixing device having an injector (20; 120;420; 520; 62) for injecting the liquid and having a shell (22; 222; 422; 522) and an inlet (16; 216; 316) and an outlet (18; 218;318) and an exhaust gas flow path between the inlet (16; 216; 316) and outlet (18; 218; 318), the mixing device defining an axis (CL) and the flow path having a first and a second part (F1, F2), the first part (F1) extending generally parallel to the axis (CL) to direct flow in a generally forward direction said first part extending up to a first axial position, the second part (F2) extending generally parallel to the axis (CL) to direct flow in a generally reverse direction, **characterized by** the flow path having a third part (F3), the third part (F3) extending generally parallel to the axis (CL) to direct flow in the generally forward direction, in which the third part (F3) is a volume that allows mixing and extends past the first axial position.

2. A mixing device (12; 112; 212; 312; 412; 512; 612; 712) as defined in claim 1 in which the exhaust gas flow path is substantially symmetrical about a centre line (CL) of the mixing device.

3. A mixing device (12; 112; 212; 312; 412; 512; 612; 712) as defined in any preceding claim in which the inlet (16; 216; 316) is defined by a central tube (30; 230; 330; 730) at least partially positioned within the shell (22; 222; 422; 522) and the outlet (18; 218; 318) is defined at least partially by said shell (22; 222; 422; 522).

4. A mixing device (12; 112; 212; 312; 412; 512; 612; 712) as defined in claim 3 in which the tube (30; 230; 330; 730) includes a blanked off tube end (32) and tube perforations (35; 235) proximate said blanked off tube end.

5. A mixing device (12; 112; 212; 312; 412; 512; 612; 712) as defined in claim 4 including a sleeve (50; 150) positioned within the shell (22; 222; 422; 522) and surrounding said tube perforations (34) and being spaced from said tube perforations, said sleeve having a blanked off sleeve end (52) proximate said blanked off tube end (32) and sleeve perforations (55; 255) remote from the said blanked off sleeve end (52).

6. A mixing device (12; 112; 212; 312; 412; 512;. 612; 712) as defined in claim 4 or 5 in which said third part (F3) is in an annulus and the sleeve (50; 150) partially defines said annulus.

7. A mixing device (12; 112; 212; 312; 412; 512; 612; 712) as defined in any one of claims 4 to 6 in which the blanked off end is supported by a baffle (60).

8. A mixing device (12; 112; 212; 312; 412; 512; 612; 712) as defined in claims 7 in which a portion of the baffle (60) acts to blank off the blanked off tube end (32) and/or the blanked off sleeve end (52).

9. A mixing device (12; 112; 212; 312; 412; 512; 612; 712) as defined in any one of claims 5 to 8 in which the sleeve (50; 150) is cylindrical.

10. A mixing device (12; 112; 212; 312; 412; 512; 612; 712) as defined in claim 5 when dependent upon claim 4 in which an open area (A2) of the tube perforations (35; 235) is approximately equal to an open area (A3) of the sleeve perforations (55; 255).

11. A mixing device (12; 112; 212; 312; 412; 512; 612; 712) as defined in claim 5 when dependent on claim 4 in which an open area (A2) of the tube perforations (35; 235) and/or an open area (A3) of the sleeve perforations (55; 255) is greater than or equal to 1.5 times the cross section area (Al) of the inlet (16; 216; 316).

12. A mixing device (12; 112; 212; 312; 412; 512; 612; 712) as defined in any preceding claim in which the cross section area (A5) of the third part (F3) is approximately equal to or greater than the cross section area (Al) of the first part (F1) and/or the cross section area (A5) of the third part (F3) is approximately equal to the cross section area (A4) of the second part (F2) and/or the cross section area (A4) of the second part (F2) is approximately equal to or greater than the cross sectional area (Al) of the first part (F1).

13. A mixing device (12; 112; 212; 312; 412; 512; 612; 712) as defined in claim, 1 or 2 in which an outlet (18; 218; 318) is defined by a central tube positioned within the shell (22; 222; 422; 522) and an inlet (16; 216; 316) is defined by an annulus, said annulus being partially defined by said shell (22; 222; 422; 522).

14. A mixing device (12; 112; 212; 312; 412; 512; 612; 712) as defined in any preceding claim in which the injector (120) is positioned to inject a reagent upstream of the mixing device (12; 112; 212; 312; 412; 512; 612; 712), in particular at the inlet of the mixing device.

15. An exhaust system (10; 110; 210; 310; 410; 510; 610; 710) including a mixing device (12; 112; 212; 312; 412; 512; 612; 712) as defined in claim 14 and an integrated catalyst (14).

## Patentansprüche

1. Mischvorrichtung (12; 112; 212; 312; 412; 512; 612; 712) zum Mischen eines Gases und einer Flüssigkeit in einer Abgasanlage (10; 110; 210; 310; 410; 510; 610; 710), wobei die Mischvorrichtung einen Injektor (20; 120; 420; 520; 62) zum Einspritzen der Flüssigkeit und ein Gehäuse (22; 222; 422; 522) aufweist und einen Einlass (16; 216; 316) und einen Auslass (18; 218; 318) und einen Abgasströmungsweg zwischen dem Einlass (16; 216; 316) und dem Auslass (18; 218; 318) hat, wobei die Mischvorrichtung eine Achse (CL) definiert und der Strömungsweg einen ersten und einen zweiten Teil (F1, F2) hat, wobei sich der erste Teil (F1) allgemein parallel zur Achse (CL) erstreckt, um die Strömung insgesamt vorwärts gerichtet zu leiten, wobei sich der erste Teil bis zu einer ersten axialen Position erstreckt, wobei sich der zweite Teil (F2) allgemein parallel zur Achse (CL) erstreckt, um die Strömung insgesamt rückwärts gerichtet zu leiten, **dadurch gekennzeichnet, dass** der Strömungsweg einen dritten Teil (F3) hat, wobei sich der dritte Teil (F3) allgemein parallel zur Achse (CL) erstreckt, um die Strömung insgesamt vorwärts gerichtet zu leiten, wobei der dritte Teil (F3) ein Volumen ist, das ein Mischen ermöglicht und sich über die erste axiale Position hinaus erstreckt.

2. Mischvorrichtung (12; 112; 212; 312; 412; 512; 612; 712) nach Anspruch 1, bei der der Abgasströmungsweg im wesentlichen symmetrisch um eine Mittelachse (CL) der Mischvorrichtung ist.

3. Mischvorrichtung (12; 112; 212; 312; 412; 512; 612; 712) nach einem vorhergehenden Anspruch, bei der der Einlass (16; 216; 316) von einem zentralen Rohr (30; 230; 330; 730) gebildet ist, das wenigstens teilweise innerhalb des Gehäuses (22; 222; 422; 522) positioniert ist, und der Auslass (18; 218; 318) wenigstens teilweise von dem Gehäuse (22; 222; 422; 522) gebildet ist.

4. Mischvorrichtung (12; 112; 212; 312; 412; 512; 612; 712) nach Anspruch 3, bei der das Rohr (30; 230; 330; 730) ein blindgeflanschtes Rohrende (32) und Rohrperforationen (35; 235) in der Nähe des blindgeflanschten Rohrendes aufweist.

5. Mischvorrichtung (12; 112; 212; 312; 412; 512; 612; 712) nach Anspruch 4, mit einer Hülse (50; 150), die innerhalb des Gehäuses (22; 222; 422; 522) positioniert ist und die Rohrperforationen (34) umgibt und von den Rohrperforationen beabstandet ist, wobei die Hülse in der Nähe des blindgeflanschten Rohrendes (32) ein blindgeflanschtes Hülsenende (52) und von dem blindgeflanschten Hülsenende (52) entfernt gelegene Hülsenperforationen (55; 255) aufweist.

6. Mischvorrichtung (12; 112; 212; 312; 412; 512; 612; 712) nach Anspruch 4 oder 5, bei der der dritte Teil (F3) in einem Ringraum liegt und die Hülse (50; 150) den Ringraum teilweise definiert.

7. Mischvorrichtung (12; 112; 212; 312; 412; 512; 612; 712) nach einem der Ansprüche 4 bis 6, bei der das blindgeflanschte Ende durch ein Leitblech (60) gehaltert ist.

8. Mischvorrichtung (12; 112; 212; 312; 412; 512; 612; 712) nach Anspruch 7, bei der ein Abschnitt des Leitblechs (60) als Blindflansch des blindgeflanschten Rohrendes (32) und/oder des blindgeflanschten Hülsenendes (52) fungiert.

9. Mischvorrichtung (12; 112; 212; 312; 412; 512; 612; 712) nach einem der Ansprüche 5 bis 8, bei der die Hülse (50; 150) zylindrisch ist.

10. Mischvorrichtung (12; 112; 212; 312; 412; 512; 612; 712) nach Anspruch 5, wenn dieser auf Anspruch 4 rückbezogen ist, bei der eine offene Fläche (A2) der Rohrperforationen (35; 235) etwa gleich einer offenen Fläche (A3) der Hülsenperforationen (55; 255) ist.

11. Mischvorrichtung (12; 112; 212; 312; 412; 512; 612; 712) nach Anspruch 5, wenn dieser auf Anspruch 4 rückbezogen ist, bei der eine offene Fläche (A2) der Rohrperforationen (35; 235) und/oder eine offene Fläche (A3) der Hülsenperforationen (55; 255) größer oder gleich dem 1,5-fachen der Querschnittsfläche (Al) des Einlasses (16; 216; 316) ist.

12. Mischvorrichtung (12; 112; 212; 312; 412; 512; 612; 712) nach einem vorhergehenden Anspruch, bei der die Querschnittsfläche (A5) des dritten Teils (F3) etwa gleich der oder größer als die Querschnittsfläche (A1) des ersten Teils (F1) ist und/oder die Querschnittsfläche (A5) des dritten Teils (F3) etwa gleich der Querschnittsfläche (A4) des zweiten Teils (F2) ist und/oder die Querschnittsfläche (A4) des zweiten Teils (F2) etwa gleich der oder größer als die Querschnittsfläche (A1) des ersten Teils (F1) ist.

13. Mischvorrichtung (12; 112; 212; 312; 412; 512; 612; 712) nach Anspruch 1 oder 2, bei der ein Auslass (18; 218; 318) von einem innerhalb des Gehäuses (22; 222; 422; 522) positionierten zentralen Rohr gebildet ist und ein Einlass (16; 216; 316) von einem Ringraum gebildet ist, wobei der Ringraum teilweise von dem Gehäuse (22; 222; 422; 522) gebildet ist.

14. Mischvorrichtung (12; 112; 212; 312; 412; 512; 612; 712) nach einem vorhergehenden Anspruch, bei der der Injektor (120) so positioniert ist, dass er stromaufwärts der Mischvorrichtung (12; 112; 212; 312; 412; 512; 612; 712), insbesondere am Einlass der Mischvorrichtung, ein Reagens einspritzt.

15. Abgasanlage (10; 110; 210; 310; 410; 510; 610; 710) mit einer Mischvorrichtung (12; 112; 212; 312; 412; 512; 612; 712) nach Anspruch 14 und einem integrierten Katalysator (14).

## Revendications

1. Dispositif de mélange (12 ; 112 ; 212 ; 312 ; 412 ; 512 ; 612 ; 712) pour le mélange d'un gaz et d'un liquide dans un système de gaz d'échappement (10 ; 110 ; 210 ; 310 ; 410 ; 510 ; 610 ; 710), le dispositif de mélange comportant un injecteur (20 ; 120 ; 420 ; 520 ; 62) pour l'injection du liquide et présentant un boîtier (22 ; 222 ; 422; 522), une entrée (16 ; 216 ; 316) et une sortie (18; 218; 318) ainsi qu'une voie d'écoulement de gaz d'échappement entre l'entrée (16 ; 216 ; 316) et la sortie (18 ; 218 ; 318), le dispositif de mélange définissant un axe (CL), et la voie d'écoulement présentant une première et une deuxième partie (F1, F2), la première partie (F1) s'étendant généralement de manière parallèle à l'axe (CL) pour diriger l'écoulement généralement en avant, la première partie s'étendant jusqu'à une première position axiale, la deuxième partie (F2) s'étendant généralement de manière parallèle à l'axe (CL) pour diriger l'écoulement généralement en arrière, **caractérisé en ce que** la voie d'écoulement présente une troisième partie (F3), la troisième partie (F3) s'étendant généralement de manière parallèle à l'axe (CL) pour diriger l'écoulement généralement en avant, la troisième partie (F3) étant un volume qui permet un mélange et s'étendant au-delà de la première position axiale.

2. Dispositif de mélange (12 ; 112 ; 212 ; 312 ; 412 ; 512 ; 612 ; 712) selon la revendication 1, dans lequel la voie d'écoulement de gaz d'échappement est sensiblement symétrique autour d'un axe médian (CL) du dispositif de mélange.

3. Dispositif de mélange (12 ; 112 ; 212 ; 312 ; 412 ; 512 ; 612 ; 712) selon l'une des revendications précédentes, dans lequel l'entrée (16; 216; 316) est définie par un tube central (30 ; 230 ; 330 ; 730) positionné au moins partiellement à l'intérieur du boîtier (22 ; 222 ; 422 ; 522) et la sortie (18 ; 218 ; 318) est définie au moins partiellement par le boîtier (22 ; 222 ; 422 ; 522).

4. Dispositif de mélange (12 ; 112; 212; 312; 412 ; 512; 612; 712) selon la revendication 3, dans lequel le tube (30 ; 230 ; 330 ; 730) présente une extrémité de tube obturée (32) et des perforations de tube (35 ; 235) à proximité de l'extrémité de tube obturée.

5. Dispositif de mélange (12 ; 112 ; 212 ; 312 ; 412 ; 512 ; 612 ; 712) selon la revendication 4, comportant une douille (50; 150) qui est positionnée à l'intérieur du boîtier (22 ; 222 ; 422 ; 522) et entoure les perforations de tube (34) et est espacée des perforations de tube, la douille présentant à proximité de l'extrémité de tube obturée (32) une extrémité de douille obturée (52) et des perforations de douille (55 ; 255) espacées de l'extrémité de douille obturée (52).

6. Dispositif de mélange (12 ; 112 ; 212 ; 312 ; 412 ; 512 ; 612 ; 712) selon la revendication 4 ou 5, dans lequel la troisième partie (F3) est située dans un espace annulaire et la douille (50 ; 150) définit partiellement l'espace annulaire.

7. Dispositif de mélange (12 ; 112; 212; 312; 412; 512; 612 ; 712) selon l'une des revendications 4 à 6, dans lequel l'extrémité obturée est retenue par un déflecteur (60).

8. Dispositif de mélange (12 ; 112 ; 212 ; 312 ; 412 ; 512 ; 612 ; 712) selon la revendication 7, dans lequel un tronçon du déflecteur (60) agit pour obturer l'extrémité de tube obturée (32) et/ou l'extrémité de douille obturée (52).

9. Dispositif de mélange (12 ; 112 ; 212 ; 312 ; 412 ; 512 ; 612 ; 712) selon l'une des revendications 5 à 8, dans lequel la douille (50; 150) est cylindrique.

10. Dispositif de mélange (12 ; 112; 212; 312; 412; 512; 612 ; 712) selon la revendication 5, lorsque celle-ci dépend de la revendication 4, dans lequel une surface ouverte (A2) des perforations de tube (35 ; 235) est environ égale à une surface ouverte (A3) des perforations de douille (55 ; 255).

11. Dispositif de mélange (12 ; 112 ; 212 ; 312 ; 412 ; 512 ; 612 ; 712) selon la revendication 5, lorsque celle-ci dépend de la revendication 4, dans lequel une surface ouverte (A2) des perforations de tube (35; 235) et/ou une surface ouverte (A3) des perforations de douille (55; 255) est supérieure ou égale à 1,5 fois la superficie de section (Al) de l'entrée (16 ; 216 ; 316).

12. Dispositif de mélange (12 ; 112; 212; 312; 412; 512; 612; 712) selon l'une des revendications précédentes, dans lequel la superficie de section (A5) de la troisième partie (F3) est environ égale ou supérieure à la superficie de section (Al) de la première partie (F1) et/ou la superficie de section (A5) de la troisième partie (F3) est environ égale à la superficie de section (A4) de la deuxième partie (F2) et/ou la superficie de section (A4) de la deuxième partie (F2) est environ égale ou supérieure à la superficie de section (Al) de la première partie (F1).

13. Dispositif de mélange (12 ; 112 ; 212 ; 312 ; 412 ; 512 ; 612 ; 712) selon la revendication 1 ou 2, dans lequel une sortie (18 ; 218 ; 318) est définie par un tube central positionné à l'intérieur du boîtier (22 ; 222 ; 422 ; 522) et une entrée (16 ; 216 ; 316) est définie par un espace annulaire, l'espace annulaire étant partiellement défini par le boîtier (22 ; 222 ; 422 ; 522).

14. Dispositif de mélange (12 ; 112 ; 212 ; 312 ; 412 ; 512 ; 612 ; 712) selon l'une des revendications précédentes, dans lequel l'injecteur (120) est positionné de manière à injecter un réactif en amont du dispositif de mélange (12 ; 112 ; 212 ; 312 ; 412 ; 512 ; 612 ; 712), en particulier au niveau de l'entrée du dispositif de mélange.

15. Système de gaz d'échappement (10 ; 110 ; 210 ; 310 ; 410 ; 510 ; 610 ; 710) comportant un dispositif de mélange (12 ; 112 ; 212 ; 312 ; 412 ; 512 ; 612 ; 712) selon la revendication 14 et un catalyseur intégré (14).
